# EUROPEAN PATENT APPLICATION

(11) **EP 4 546 230 A1**
(43) Date of publication of application: **30.04.2025**
(21) Application number: 24208747.6
(22) Date of filing: 24.10.2024
(51) Int. Cl.: G06Q 10/06, G06F 40/56, G06Q 10/10

(54) **CREATING A RELIABLE CONFIGURATION SPECIFICATION USING AN LLM**

(30) Priority: 25.10.2023 EP 23205902
(71) Applicant: Siemens Mobility Austria GmbH, 1210 Wien (AT)
(72) Inventor: Kogler, Philipp, 9433 Sankt Andrä (AT); Falkner, Andreas, 1140 Wien (AT); Haselböck, Alois, 3394 Schönbühel-Aggsbach (AT); Sperl, Simon, 4030 Linz (AT)
(74) Representative: Siemens Patent Attorneys

(57) **Abstract**

The invention relates to a computer-implemented method for generating a configuration specification for controlling a device, comprising the following steps:
- Accessing a pre-trained language model, wherein the pre-trained language model is configured to generate a configuration specification depending on provided input data,
- Receiving text data as input data for the pre-trained language model, wherein the text data are natural language text data, wherein the text data specifies requirements for controlling the device, wherein the text data is combined with additional instructions to generate an input prompt,
- Processing the input prompt using the pre-trained language model, wherein a configuration specification is generated as a sequence of tokens,
i. wherein a first token is generated to begin the sequence of tokens,
ii. wherein a further token is added to the sequence of tokens, wherein a post-processing step is applied to ensure adding a further token as valid continuation of the sequence of tokens,
iii. wherein the step of adding a further token to the sequence of tokens is repeated until a stop criterion is met,

- Providing the configuration specification for controlling the device.

## Description

Up to now, configuration specifications are either written manually by the domain experts, or they are created by a product configurator. A product configurator is a tool that allows via a user interface to specify all relevant requirements for the new product variant, e.g. as disclosed by A. Felfernig and L. Hotz and C. Bagley and J. Tiihonen. Knowledge-based Configuration - From Research to Business Cases. Morgan Kaufmann, 2014*.*

A variation of a post-processing method has already been described as a part of a more general framework through the abstract concept of completion engines, computing the full set of valid continuations for a given state, e.g. as disclosed by Poesia, G., Polozov, O., Le, V., Tiwari, A., Soares, G., Meek, C., & Gulwani, S. (2022). Synchromesh: Reliable code generation from pre-trained language models. http://anciv.org/abs/2201.11227

It is a problem that customizable products can be configured through formal specifications. Such products are consumer products, industrial plants, or infrastructure facilities. The formal configuration specifications must be formulated in a well-defined formal language. Often, Json, XML or other domain-specific languages are used. It is only important that the language is defined in an exact schema definition.

Creating a configuration specification that is syntactically correct and correct in content is essential, but very difficult for a human domain expert. Errors in this specification could lead to defective products or to products that cannot be manufactured.

Typically, a tool is provided (a so-called configurator) that allows the domain expert to enter the configuration specification in a user interface. The output of the configurator is the configuration specification. But such a configurator tool is hard to implement and maintain.

It is the object of the invention to disclose a method and a system which enable a dialog with the domain expert in natural language and automatically generates the configuration specification.

The object of this invention is solved according to the invention by a method according to claim 1, a system according to claim 8, a device according to claim 9, a computer program product according to claim 10, and a computer-readable medium according to claim 11.

*Independent of the grammatical term usage, individuals with male, female or other gender identities are included within the term.* Embodiments of the invention are explained in more detail with reference to drawings.

A computer-implemented method for generating a configuration specification for controlling a device, comprising the following steps:
- Accessing a pre-trained language model, wherein the pre-trained language model is configured to generate a configuration specification depending on provided input data,
- Receiving text data as input data for the pre-trained language model, wherein the text data are natural language text data, wherein the text data specifies requirements for controlling the device, wherein the text data is combined with additional instructions to generate an input prompt,
- Processing the input prompt using the pre-trained language model, wherein a configuration specification is generated as a sequence of tokens,
   i. wherein a first token is generated to begin the sequence of tokens,
   ii. wherein a further token is added to the sequence of tokens, wherein a post-processing step is applied to ensure adding a further token as valid continuation of the sequence of tokens,
   iii. wherein the step of adding a further token to the sequence of tokens is repeated until a stop criterion is met,
- Providing the configuration specification for controlling the device.

The computer-implemented method can be especially designed for generating a configuration specification for controlling a technical device. The text data can especially specify requirements for controlling the technical device. The configuration specification can be especially provided for controlling the technical device.

The post-processing step is applied to ensure adding a further token as a valid continuation of the sequence of tokens. The sequence of tokens can also be called a partial output sequence of the configuration specification, especially as long as the configuration specification is not complete, or the stop criterion is not met. Ensuring adding a further token as a valid continuation of the sequence of tokens can mean that only a valid or approved token can be added to the sequence of tokens.

According to an aspect of the invention, the additional instructions comprise a configuration language schema definition.

According to an aspect of the invention, the additional instructions comprise at least one example test data and/or example configuration specification.

According to an aspect of the invention, the additional instructions comprise at least one standard text with instructions to advise the pre-trained language model to only generate code in a specified formal language.

According to an aspect of the invention, the pre-trained language model is based on an autoregressive transformer model.

According to an aspect of the invention, the post-processing step comprises the steps of:
- a plurality of candidate tokens is generated based on the input prompt and the sequence of tokens,
- the candidate tokens are evaluated with regard to a priority whether the candidate token represents a valid continuation of the sequence of tokens according to the configuration language schema definition, and
- the candidate token with the highest priority is selected to be added as further token to the sequence of tokens.

According to an aspect of the invention, the stop criterion describes a completeness of the configuration specification according to the configuration language schema definition.

The invention further relates to a system for generating a configuration specification for controlling a device, comprising:
- An interface that is configured to access a pre-trained language model, wherein the pre-trained language model is configured to generate a configuration specification depending on provided input data,
- an input module that is configured to receive text data as input data for the pre-trained language model, wherein the text data are natural language text data, wherein the text data specifies requirements for controlling the device, wherein the text data is combined with additional instructions to generate an input prompt,
- a processor that is configured to process the input prompt using the pre-trained language model, wherein a configuration specification is generated as a sequence of tokens,
   i. wherein a first token is generated to begin the sequence of tokens,
   ii. wherein a further token is added to the sequence of tokens, wherein a post-processing step is applied to ensure adding a further token as valid continuation of the sequence of tokens,
   iii. wherein the step of adding a further token to the sequence of tokens is repeated until a stop criterion is met,
- an output module that is configured to provide the configuration specification for controlling the device.

The invention relates to a method as generally described herein for generating a configuration specification.

The invention further relates to a system as generally described herein for generating a configuration specification.

The invention further relates to a device for planning and/or manufacturing a product based on a configuration specification generated according to the method of the invention.

The invention further relates to a computer program product comprising a computer program directly loadable into a memory unit of a control unit of a system, comprising program elements to perform the steps of a method according to the invention when the computer program is executed in the control unit of the system.

The invention further relates to a computer-readable medium having stored thereon program elements readable and executable by a computer unit to perform the steps of a method according to the invention when the program elements are executed by the system.

The invention relates to a method using an Al-based LLM (Large Language Model) that conducts a dialog with the domain expert in natural language and automatically generates the configuration specification.

According to the invention, as further described below, an LLM is used for a natural language dialog, and post-processing to strictly guide the LLM towards the generation of valid configuration specifications. The use of an LLM alone is not sufficient as the resulting configuration specification is not guaranteed to be valid.

An approach according to the invention is a solution for configuration specifications in domain-specific languages following a strict schema by efficiently validating partial configuration specifications and possible continuations on the fly. Advantages are a minimal impact on LLM generation performance and the absence of any pre-computation.

The inventors propose the usage of a LLM (like GPT-4, or better an LLM that is specifically trained on code, like Codex) to allow a domain expert to enter his/her configuration requirements in natural language. The LLM then generates the configuration specifications automatically.

The invention will be explained in more detail by reference to the accompanying figures.
Fig. 1: shows a first exemplary embodiment of the method according to the invention, and
Fig. 2: shows a second exemplary embodiment of the method according to the invention.

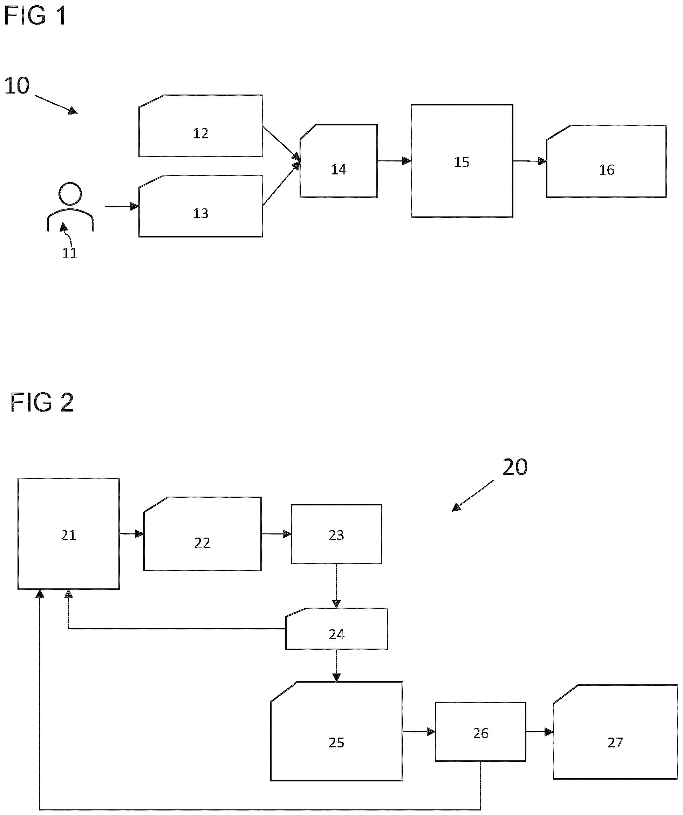

In Fig. 1, the basic method 10 is sketched. A domain expert 11 formulates his/her requirements 13 in natural language. The input prompt 14 for the LLM 15 is built of this requirements 13 text plus additional instructions 12 for the LLM 15. These instructions 12 at least consist of the configuration language schema definition, some examples ("few-shot prompting") and some standard texts to advise the LLM 15 to only generate code in the specified formal language. The output of the LLM dialog is the resulting configuration specification 16 that can be used to plan and manufacture the product.

A deficiency of such an LLM-based solution is that LLMs in general cannot guarantee that the result is correct. This deficiency can be resolved by the novel approach to control the output generation of the LLM by a specialized post-processing algorithm.

This algorithm works in the following way: As depicted in Fig 2., the LLM 21, in particular an autoregressive transformer model, generates its output step-by-step as so-called tokens, comprising multiple characters. The post-processing 23 algorithm engages into every generation step: For each step, the LLM 21 generates hundreds or thousands of candidates for the next token based on the prompt and the generated output so far. A plurality of tokens 22 is generated which can be also called a list of token candidates. Sorted by priority, the algorithm evaluates whether the token candidate represents a valid continuation of the partial output sequence according to the given configuration specification schema. The partial output sequence can be called a sequence of tokens 25 or the output sequence. The valid token candidate with the highest priority is then selected and added to the output sequence, extending it one step further towards a full and valid configuration specification. The valid token candidate can be called a next token or a further token 24. A stop criterion 26 is employed and evaluated after every step to determine, if the configuration specification 27 is complete according to the schema definition.

The solution according to the invention is based on a natural language dialog, instead of manually writing the configuration specification in a formal language or using a configurator (which is a software which allows to input all necessary requirements in a user interface).

Using a LLM 21 usually cannot guarantee to generate a valid output, but the approach according to the invention overcomes this deficiency and guarantees that the output is valid with respect to the configuration specification language schema, and therefore ensures that this formal configuration specification 27 can be used to engineer and manufacture the product.

The invention further relates to a device for planning and/or manufacturing a product based on a configuration specification generated according to the method of the invention. The device can be configured to plan and/ or manufacture e.g. a railway safety system.

In Fig. 1 and Fig. 2, details of the computer-implemented method 10, 20 for generating a configuration specification 16, 27 for controlling a device are shown. The method 10, 20 comprising the following steps:
- Accessing a pre-trained language model 15, 21, wherein the pre-trained language model 15, 21 is configured to generate a configuration specification 16, 27 depending on provided input data,
- Receiving text data as input data for the pre-trained language model 15, 21, wherein the text data are natural language text data, wherein the text data specifies requirements 13 for controlling the device, wherein the text data is combined with additional instructions 12 to generate an input prompt 14,
- Processing the input prompt 14 using the pre-trained language model 15, 21, wherein a configuration specification 16, 27 is generated as a sequence of tokens 25,
   ∘ wherein a first token is generated to begin the sequence of tokens 25,
   ∘ wherein a further token 24 is added to the sequence of tokens 25, wherein a post-processing step 23 is applied to ensure adding a further token 24 as valid continuation of the sequence of tokens 25,
   ∘ wherein the step of adding a further token 24 to the sequence of tokens 25 is repeated until a stop criterion 26 is met,
- Providing the configuration specification 16, 27 for controlling the device.

The additional instructions 12 can comprise a configuration language schema definition.

The additional instructions 12 can comprise at least one example test data and/or example configuration specification.

The additional instructions 12 can comprise at least one standard text with instructions to advise the pre-trained language model 15, 21 to only generate code in a specified formal language.

The pre-trained language model 15, 21 is based on an autoregressive transformer model.

The post-processing step 23 comprises the steps of:
- a plurality of candidate tokens 22 is generated based on the input prompt and the sequence of tokens,
- the candidate tokens are evaluated with regard to a priority whether the candidate token represents a valid continuation of the sequence of tokens 25 according to the configuration language schema definition, and
- the candidate token with the highest priority is selected to be added as further token 24 to the sequence of tokens 25.

The stop criterion 26 describes a completeness of the configuration specification 16, 27 according to the configuration language schema definition.

The system for generating a configuration specification 16, 27 for controlling a device, comprises:
- An interface that is configured to access a pre-trained language model 15, 21, wherein the pre-trained language model 15, 21 is configured to generate a configuration specification 16, 17 depending on provided input data,
- an input module that is configured to receive text data as input data for the pre-trained language model 15, 21, wherein the text data are natural language text data, wherein the text data specifies requirements 13 for controlling the device, wherein the text data is combined with additional instructions 12 to generate an input prompt 14,
- a processor that is configured to process the input prompt 14 using the pre-trained language model 15, 21, wherein a configuration specification 16, 27 is generated as a sequence of tokens,
   ∘ wherein a first token is generated to begin the sequence of tokens 25,
   ∘ wherein a further token 24 is added to the sequence of tokens 25, wherein a post-processing step 23 is applied to ensure adding a further token 24 as valid continuation of the sequence of tokens 25,
   ∘ wherein the step of adding a further token 24 to the sequence of tokens 25 is repeated until a stop criterion 26 is met,
- an output module that is configured to provide the configuration specification 16, 27 for controlling the device.

Although the invention has been further illustrated in detail by the preferred embodiments, the invention is not limited by the disclosed examples and other variations may be derived therefrom by those skilled in the art without departing from the scope of protection of the invention.

### List of reference signs

- 10: Method
- 11: Domain Expert
- 12: Instructions
- 13: Requirements
- 14: input prompt
- 15: pre-trained language model (LLM)
- 16: Configuration Specification

- 20: Method
- 21: pre-trained language model (LLM)
- 22: List of Token Candidates, plurality of candidate tokens
- 23: Post-processor
- 24: Next token, further token
- 25: Partial Configuration Specification, sequence of tokens
- 26: Stop Criterion
- 27: Full & Valid Configuration Specification

## Claims

1. A computer-implemented method (10, 20) for generating a configuration specification (16, 27) for controlling a device, comprising the following steps:
- Accessing a pre-trained language model (15, 21), wherein the pre-trained language model (15, 21) is configured to generate a configuration specification (16, 27) depending on provided input data,
- Receiving text data as input data for the pre-trained language model (15, 21), wherein the text data are natural language text data, wherein the text data specifies requirements (13) for controlling the device, wherein the text data is combined with additional instructions (12) to generate an input prompt (14),
- Processing the input prompt (14) using the pre-trained language model (15, 21), wherein a configuration specification (16, 27) is generated as a sequence of tokens (25),
i. wherein a first token is generated to begin the sequence of tokens (25),
ii. wherein a further token (24) is added to the sequence of tokens (25), wherein a post-processing step (23) is applied to ensure adding a further token (24) as valid continuation of the sequence of tokens (25),
iii. wherein the step of adding a further token (24) to the sequence of tokens (25) is repeated until a stop criterion (26) is met,
- Providing the configuration specification (16, 27) for controlling the device.

2. Method according to claim 1, wherein the additional instructions (12) comprise a configuration language schema definition.

3. Method according to one of the preceding claims, wherein the additional instructions (12) comprise at least one example test data and/or example configuration specification.

4. Method according to one of the preceding claims, wherein the additional instructions (12) comprise at least one standard text with instructions to advise the pre-trained language model (15, 21) to only generate code in a specified formal language.

5. Method according to one of the preceding claims, wherein the pre-trained language model (15, 21) is based on an autoregressive transformer model.

6. Method according to one of the preceding claims, wherein the post-processing step (23) comprises the steps of:
- a plurality of candidate tokens (22) is generated based on the input prompt and the sequence of tokens,
- the candidate tokens are evaluated with regard to a priority whether the candidate token represents a valid continuation of the sequence of tokens (25) according to the configuration language schema definition, and
- the candidate token with the highest priority is selected to be added as further token (24) to the sequence of tokens (25).

7. Method according to one of the preceding claims, wherein the stop criterion (26) describes a completeness of the configuration specification (16, 27) according to the configuration language schema definition.

8. A system for generating a configuration specification (16, 27) for controlling a device, comprising:
- An interface that is configured to access a pre-trained language model (15, 21), wherein the pre-trained language model (15, 21) is configured to generate a configuration specification (16, 17) depending on provided input data,
- an input module that is configured to receive text data as input data for the pre-trained language model (15, 21), wherein the text data are natural language text data, wherein the text data specifies requirements (13) for controlling the device, wherein the text data is combined with additional instructions (12) to generate an input prompt (14),
- a processor that is configured to process the input prompt (14) using the pre-trained language model (15, 21), wherein a configuration specification (16, 27) is generated as a sequence of tokens,
i. wherein a first token is generated to begin the sequence of tokens (25),
ii. wherein a further token (24) is added to the sequence of tokens (25), wherein a post-processing step (23) is applied to ensure adding a further token (24) as valid continuation of the sequence of tokens (25),
iii. wherein the step of adding a further token (24) to the sequence of tokens (25) is repeated until a stop criterion (26) is met,
- an output module that is configured to provide the configuration specification (16, 27) for controlling the device.

9. A device for planning and/or manufacturing a product based on a configuration specification (16, 27) generated according to the method (10, 20) of one of the claims 1 to 7.

10. A computer program product comprising a computer program directly loadable into a memory unit of a control unit of a system, comprising program elements to perform the steps of a method (10, 20) according to one of the claims 1 to 7 when the computer program is executed in the control unit of the system.

11. A computer-readable medium having stored thereon program elements readable and executable by a computer unit to perform the steps of a method (10, 20) according to one of the claims 1 to 7 when the program elements are executed by the system.
